# EUROPEAN PATENT SPECIFICATION

(11) **EP 3 194 149 B1**
(45) Date of publication and mention of the grant of the patent: **29.04.2020**
(21) Application number: 15845520.4
(22) Date of filing: 10.09.2015
(51) Int. Cl.: B29C 67/00, F02K 9/12

(54) **SOLID PROPELLANT HAVING MICRO-VOIDS AND ROCKET MOTOR COMPRISING THE PROPELLANT**
ENERGIEKORN MIT MIKRO-HOHLRÄUMEN UND RAKETENMOTOR DIESEN ENERGIEKORN UMFASSEND
PAIN D'ÉNERGIE COMPORTANT DES MICROVIDES ET MOTEUR DE FUSÉE COMPORTANT CE PAIN D'ÉNERGIE

(30) Priority: 16.09.2014 US 201462051227 P; 19.09.2014 US 201462053036 P
(43) Date of publication of application: 26.07.2017
(73) Proprietor: Aerojet Rocketdyne, Inc., Sacramento, CA 95813-6000 (US)
(72) Inventor: LYNCH, Michael Douglas, Sacramento, California 95813-6000 (US)
(74) Representative: Dehns
(86) International application number: PCT/US2015/049346
(87) International publication number: WO 2016/089461

(56) References cited:
- EP-A1- 0 463 659
- EP-A2- 0 665 415
- WO-A1-2013/001267
- WO-A2-2013/019876
- US-A- 3 290 190
- US-A- 4 891 938
- US-A- 5 205 983
- US-A1- 2009 217 525
- Anonymous: "Could 3D printing be used to achieve perfect grain geometry of solid and hybrid rocket motors", Space Stack Exchange , 11 August 2014 (2014-08-11), XP002754760, Retrieved from the Internet: URL:http://space.stackexchange.com/questio ns/4153/could-3d-printing-be-used-to-achie ve-perfect-grain-geometry-of-solid-and-hyb rid [retrieved on 2016-02-24]
- Ron Jones: "Hybrid Rocket Engines use Additive Manufacturing to combine the advantages of solid and liquid propellants", Stratasys , 15 October 2010 (2010-10-15), XP002754761, Retrieved from the Internet: URL:http://www.stratasys.com/resources/cas e-studies/aerospace/rocket-crafters [retrieved on 2016-02-24]

## Description

### BACKGROUND

This disclosure relates to solid propellant rocket motors. Such motors can include a solid propellant grain material that is cast around a core. The core is then removed by sliding it out from the cast grain material, leaving an open central bore. Ignition at the bore surface of the solid propellant generates high pressure gas, which is expelled from the bore through a nozzle to generate thrust.

A prior art solid propellant having the features of the preamble to claim 1 is disclosed in US 4,891,938.

### SUMMARY

From one aspect, the present invention provides a solid propellant according to claim 1.

In an embodiment, the bottom surface of the second energetic grain layer partially abuts the top surface of the first energetic grain layer at a predetermined geometry.

In a further embodiment of any of the forgoing embodiments, the predetermined geometry is selected to define a predetermined flowpath via the micro-void.

In a further embodiment of any of the forgoing embodiments, the bottom surface of the second energetic grain layer includes a surface feature.

In a further embodiment of any of the forgoing embodiments, the surface feature is selected from the group consisting of a protrusion, a rib, a bump, a trapezoid, an ellipsoid, a stud, and a honeycomb.

In a further embodiment of any of the forgoing embodiments, the micro-void is a radially elongated slot.

In a further embodiment of any of the forgoing embodiments, the micro-void includes a hollow micro-sphere.

In a further embodiment of any of the forgoing embodiments, the first energetic grain layer includes the micro-void and the second energetic grain layer is solid.

From another aspect, the present invention provides a rocket motor according to claim 9.

In an embodiment, the micro-void has a geometric shape.

A further embodiment of any of the foregoing embodiments includes a plurality of the micro-voids, and the micro-voids are uniformly circumferentially-spaced around the central axis.

In a further embodiment of any of the forgoing embodiments, the micro-void is radially elongated slots.

In a further embodiment of any of the forgoing embodiments, the micro-void includes a hollow micro-sphere.

In a further embodiment of any of the forgoing embodiments, the first energetic grain layer includes the micro-void and the second energetic grain layer is solid.

In a further embodiment of any of the forgoing embodiments, the rocket motor further comprises an inner energetic grain layer with a section aft of the micro-void with respect to proximity to the nozzle, the section including a group of protrusions that are axially-spaced along the central axis.

In a further embodiment of any of the forgoing embodiments, the protrusions have uniform axial thicknesses.

In a further embodiment of any of the forgoing embodiments, the first energetic grain layer and the second energetic grain layer are of different chemical compositions.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example rocket motor.
Figure 2 illustrates an isolated view of an example of a central core of the solid propellant section of the rocket motor of Figure 1.
Figure 3A illustrates a cross-section of the central core showing a multi-layer structure.
Figure 3B illustrates a sectioned cutaway view of the central core and multi-layer structure with micro-voids.
Figures 4A-4E illustrates different geometries of surface features.
Figure 5 illustrates a sectioned cutaway view of another example central core and multi-layer structure with hollow micro-spheres.
Figure 6A illustrates a cross-section of a solid propellant section taken at a first axial location.
Figure 6B illustrates a cross-section of a solid propellant section taken at a second axial location forward of the first axial location.
Figure 7A illustrates a cross-sectional view taken toward the aft end of a solid propellant section.
Figure 7B illustrates a cutaway view of the aft end of the solid propellant section.
Figure 7C illustrates a cutaway view from the location shown in Figure 6B.
Figure 8 illustrates an example additive manufacturing process.
Figure 9 illustrates an example system for performing the process of Figure 8.

### DETAILED DESCRIPTION

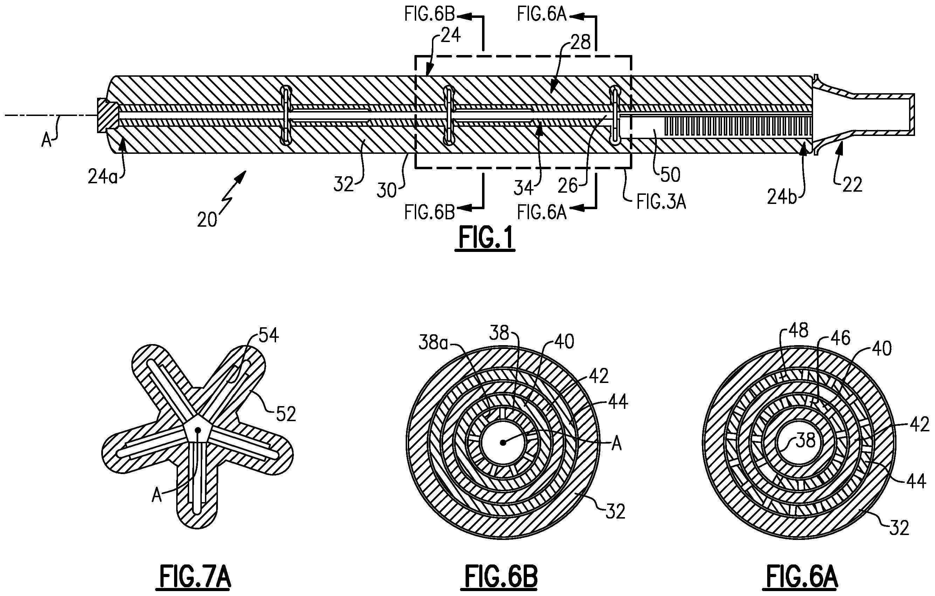

Figure 1 schematically illustrates selected portions of a cross-section of an example rocket motor 20. The rocket motor 20 generally includes a nozzle 22 and a solid propellant section 24. As can be appreciated, the rocket motor 20 may also include additional, conventional components that are not described herein.

The solid propellant section 24 includes a forward end 24a and an aft end 24b in communication with the nozzle 22. The solid propellant section 24 includes an opening 26 along a central axis A and a solid energetic material 28 disposed within a motor case 30. The solid energetic material 28 includes an outer or outermost energetic grain layer 32 that is disposed about a central core 34. The central core 34 includes multiple layers of energetic grain material arranged around the opening 26, which is in communication with the nozzle 22.

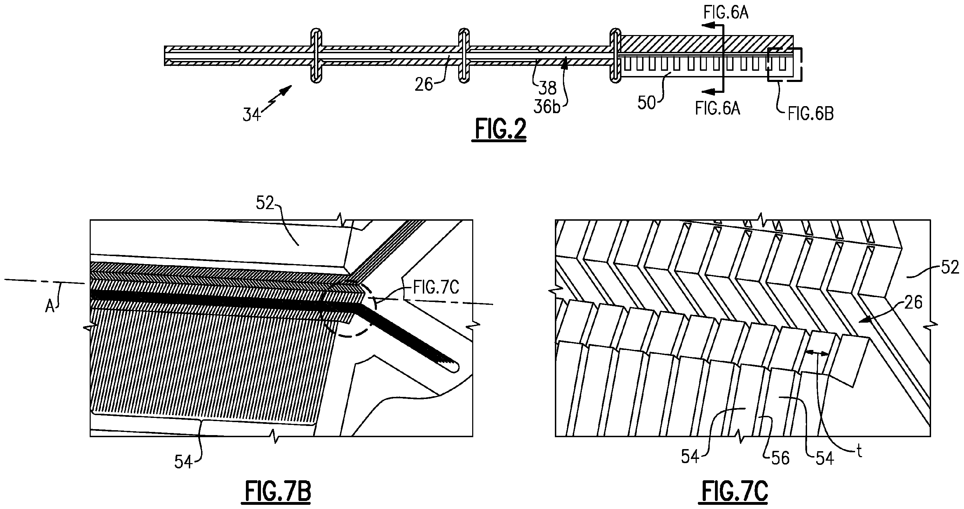

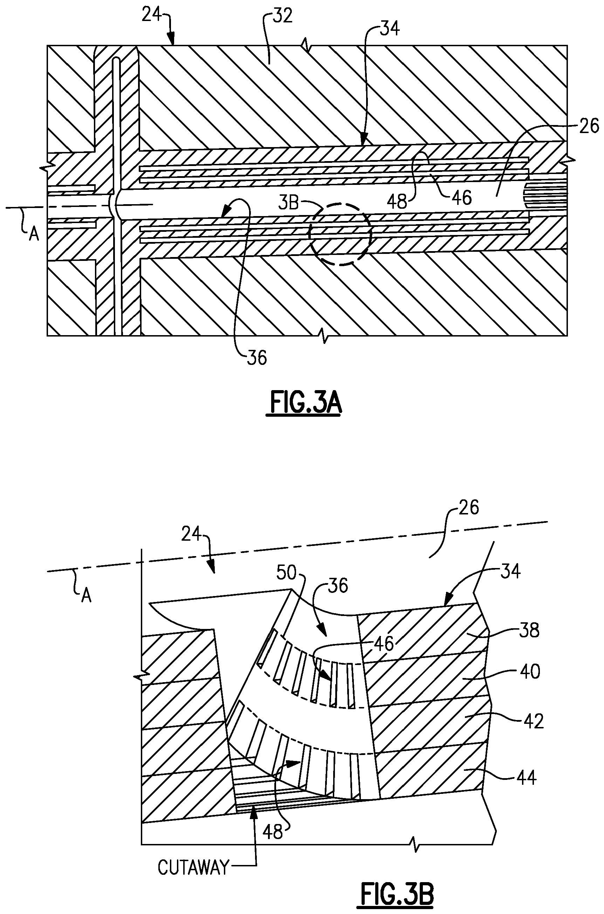

Figure 2 illustrates an isolated view of the central core 34, and Figures 3A and 3B illustrate, respectively, a closer view of a portion of the solid propellant section 24 and a cutaway section of the solid propellant section 24. The central core 34 includes a multi-layer arrangement 36 of energetic grain layers. In this example, the arrangement 36 includes four such layers, represented at 38/40/42/44, but can alternatively include fewer layers or additional layers. The layers 38/40/42/44 are arranged such that layer 38 is an inner or innermost layer with respect to the axis A, layer 44 is an outer or outermost layer, and layers 40/42 are intermediate layers. Each of the layers 38/40/42/44 has a top surface and a bottom surface. For example, the bottom surfaces face toward the central axis A and the top surfaces face away from the axis A.

The layers 38/40/42/44 can have the same composition, but in additional examples, at least one of the layers 38/40/42/44 has a different composition from at least one other of the layers 38/40/42/44. For example, the layers 38/40/42/44 may have different amounts of inert material to provide different reaction rates to generate gas and tailor gas velocities for short durations, or the layers 38/40/42/44 may have different types or amounts of energetic material with burn rates that differ from one another or that differ from the outermost energetic grain layer 32 that is disposed about a central core 34.

As shown, layer 40 and layer 44 include, respectively, a plurality of voids or micro-voids 46 and plurality of voids or micro-voids 48. In this example, layers 38 and 42 are solid layers that do not contain any micro-voids. Layer 38 and layer 40 meet each other at an interface 50. The micro-voids 46 at the interface 50 decouple the layer 40 from the layer 38. That is, the layers 38 and 40 only partially conform with each other because of the discontinuity provided by the micro-voids 46. Similarly, layer 38 is also decoupled with respect to layer 42, and layer 44 is decoupled with respect to layer 42. Thus, as used in this disclosure, any two of these decoupled layers can be considered to be first and second decoupled layers, regardless of their position in the multi-layer arrangement 36. Alternatively, although layers 40 and 44 are shown with the micro-voids 46 and 48, it is to be understood that this disclosure is not limited to such an arrangement and that layers 38 and/or 42 could alternatively have voids or micro-voids, or could additionally have voids or micro-voids in a different pattern than an adjacent layer.

The micro-voids 46 and 48 can be geometric features that are purposely and non-randomly fabricated into the layers 40 and 44. In this example, the micro-voids 46 and 48 are radially elongated slots that are longer in the radial direction than they are wide in the circumferential direction. As used herein, the term "micro-void" refers to a hollow, enclosed volume that has at least one distinct dimension that is approximately 1000 micrometers or less. To modify the surface area, the micro-voids may more typically have at least one distinct dimension that is less than 500 micrometers or that is less than 100 micrometers. In this example, at least the circumferential dimension of the slots is less than 500 micrometers.

The slots are uniformly circumferentially-spaced around the axis A. Such a slot geometry can facilitate the increase of surface area of the layers 40/44 for controlled burn rate during operation of the rocket motor 20, as will be described in further detail below. In other examples, the micro-voids 46/48 can have other non-random, geometric shapes, such as but not limited to cylindrical, oblong, tapered, stepped, polygonal, and honeycomb, in order to facilitate tailoring the amount of exposed surface area for burning. Additionally, the micro-voids 46/48 can be provided in other non-random patterns in one or more of the layers.

The surface areas of the layers 38/40/42/44 are tailored to provide increased or decreased rates of consumption or burning for controlling generated gas velocity. For example, the micro-voids disclosed herein can be provided in one or more layers to provide higher surface area in correspondence with a lower temperature phase of burn. Lower surface area, from the absence of any of the micro-voids or different geometry micro-voids, can be provided in correspondence with a higher temperature phase of burn, to reduce the effect of increasing burn rate with increasing temperature. Thus, the geometry of each of the layers 38/40/42/44 can be selected with respect to the presence or not of micro-voids and with respect to the geometry of the micro-voids to tailor burn rate of the particular layer.

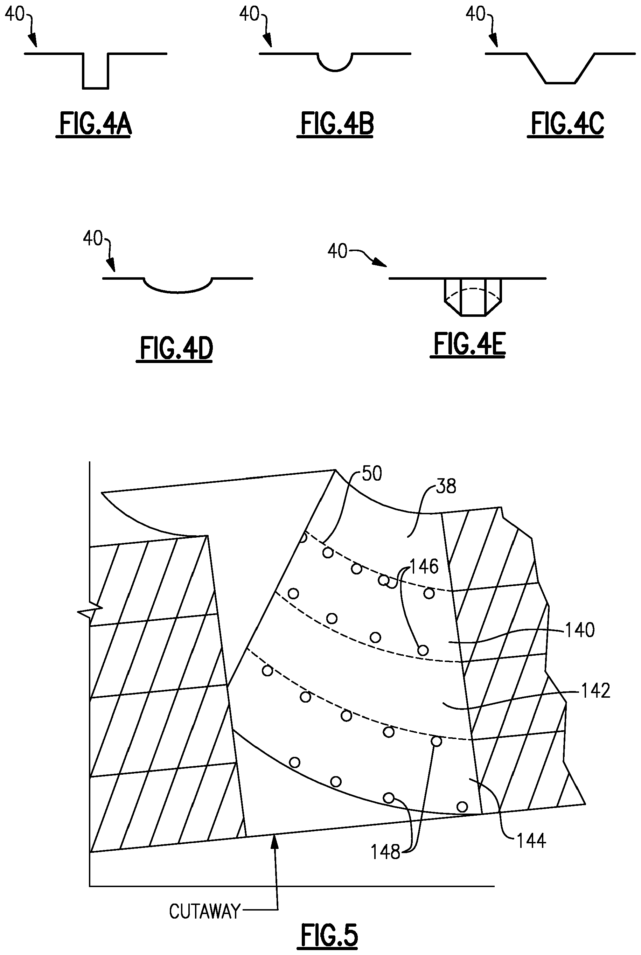

The micro-voids 46/48 may be formed, at least in part, by one or more surfaces features on the bottom surface of one or more of the layers 38/40/42/44. As can be appreciated, the surface features can be designed such that the shape of the micro-voids 46/48 differ. Figures 4A, 4B, 4C, 4D, and 4E show examples of modified layer 40 with different surface feature protrusions. In Figure 4A, the surface feature protrusion is a rib or stud. In Figure 4B, the surface feature protrusion is a bump. In Figure 4C, the surface feature protrusion is a trapezoid. In Figure 4D, the surface feature protrusion is an ellipsoid, and in Figure 4E the surface feature protrusion is a honeycomb. Likewise, negatives of any of the protrusions could additionally or alternatively be used.

Figure 5 illustrates a modified example in which, instead of the slot micro-voids 46/48, the layers 140 and 144 include hollow micro-spheres 146/148 as the micro-voids. The hollow micro-spheres 146/148 can be distributed through the layers 140/144, although at least a portion of the hollow micro-spheres 146/148 reside at the interface 50 such that the layer 140 is decoupled from the layer 38. Again, similar to as described above, in this example layer 140 is also decoupled from layer 42, and layer 144 is decoupled from layer 42. In one example, the distribution of the hollow micro-spheres 146/148 is controlled and is non-uniform through the layers 140/144. For instance, the hollow micro-spheres 140/144 are only distributed in the bottom and/or top surfaces of the layers 140/144 such that the hollow micro-spheres 140/144 are only located at, or are at least more concentrated at, the interfaces 50. In further examples, the one or more layers with the micro-spheres are used in alternating arrangement with one or more layers that do not contain micro-spheres.

In addition to decoupling the layers 38/140/40/144, the micro-voids and/or hollow micro-spheres 140/144 also enable the mechanical properties of the outer or outermost energetic grain layer 32 to be relaxed. For instance, micro-voids that are parallel to the interface serve for stress relief such that the decoupling permits the outer or outermost energetic grain layer 32 to shrink outwards with less restraint from the central core 34. As a result, the outer or outermost energetic grain layer 32 can have a lower modulus and higher strain to failure, and the potential for cracking at the interface may be reduced. The hollow micro-spheres 146/148 also serve to increase surface area in the layers 140/144. Initially, the micro-spheres 146/148 serve as reinforcement; however, upon burn back of the layers 140/144 during use, the micro-spheres 146/148 become exposed and collapse/break to thus expose additional surface area in the layers 140/144. Accordingly, the micro-spheres 146/148 can be selected for a particular strength such that they do not collapse until exposed to create additional surface area and thus increase mas flow, pressure, and thrust of the particular layer. In further examples, the hollow micro-spheres 146/148 are used in combination with slot geometry or other geometry micro-voids as described above.

Figures 6A and 6B show cross-sections taken at different axial positions (see Figure 1) along the solid propellant section 24. Although the geometry of the layers 38/40/42/44 may be constant along the full axial length of the central core 34, the geometries in this example vary axially. For example, Figure 6A shows the geometry that corresponds to the cutaway shown and described with respect to Figure 3B, wherein the layers 40 and 44 have the micro-voids 46 and 48. However, at the axial location shown in Figure 6B, layers 40 and 44 do not have any micro-voids and, instead, only layer 38 has micro-voids 38a at this location. Thus, not only can the surface recession of one layer to another of the layers 38/40/42/44 be tailored, but sections of each layer 38/40/42/44 can be individually tailored along the axial length by selectively providing micro-voids to control the amount of surface area available for burning in that section. For instance, the layers 38/40/42/44 can be tailored to initially burn and open a larger volume toward the aft end 24b to provide a greater flow area for gas generated by subsequently ignited, upstream portions of the layers to maintain flow velocity within desired limits. The gas flow otherwise may have higher potential to choke and/or accelerate to velocities that can increase erosive burning to an undesirable level.

Figure 7A shows a cross-section taken through an aft portion of the central core 34. Figure 7B shows a cross-sectional cutaway view and Figure 7C shows a closer view. At this location, the central core 34 has a "star" cross-sectional configuration and includes an inner energetic grain layer 52 with a section that is aft of the micro-voids 46/48 with respect to proximity to the nozzle 22. The layer 52 includes a group of protrusions 54 that are axially-spaced along the central axis A. The protrusions 54 increase the surface area in this section of the central core 34. In this example, the protrusions 54 are axially-spaced fins that each have a uniform axial thickness, represented at "t." The fins are axially-spaced apart by open slots 56, which are also of uniform axial thickness and can also be considered to be micro-voids. The fins and slots provide relatively uniform access to, or exposure of, the surfaces for reaction to generate gas. As can be appreciated given this disclosure, the protrusions 54 could alternatively have a different geometry pattern that is selected to provide a desired surface area and exposure, subject to the ability to fabricate such geometry.

The protrusions 54 provide a high surface area at the aft end 24b. Upon ignition, the protrusions 54 are relatively rapidly consumed or burned at a higher rate than other, upstream sections of the central core 34. Thus, the aft end 24b of the opening 26 toward the nozzle 22 becomes enlarged to provide a greater flow area for gas generated by subsequently ignited, upstream layers and to maintain flow velocity within desired limits. The gas flow otherwise may have higher potential to choke and/or accelerate to velocities that can increase erosive burning.

In a further example, the protrusions 54 are micro-geometry protrusions. For instance, the periphery of each protrusion 54 has at least one distinct dimension that is 1000 micrometers or less. However, to increase surface area, the protrusions 54 may more typically have at least one distinct dimension that is less than 500 micrometers or that is less than 100 micrometers. In the example of the fins, the axial thickness "t" is less than 500 micrometers, or less than 100 micrometers.

The tailoring of the surface areas of the layers herein may be used to maintain a surface area that is sufficiently high to provide a required mass flow, and thus thrust. For example, when a layer burns out, the next layer may have a tailored surface area to provide adequate mass flow (thrust) while keeping within acceptable combustion-driven limits. The surface areas may also be tailored to keep the gas velocity low enough to avoid erosive burning or choking. For instance, the initial enlargement of the aft end of the opening 26 from burn of the protrusions 54 can be used to maximize the surface area as far aft as possible early in the burn. Surface area of subsequent layers can be tailored to progressively enlarge the opening 26 moving forward to control gas flow to be within desired velocities. Additionally, by providing a large portion of the boost thrust via the central core 34, the burn rate of the (main) outer or outermost energetic grain layer 32 may be better tailored to a "sustain" phase of the rocket motor 20.

The central core 34 can additionally serve to encapsulate the outer or outermost energetic grain layer 32 between the structural case 30 and the central core 34. The encapsulation may permit the reduction or elimination of free and unsupported inner surfaces of the outer or outermost energetic grain layer 32. Thus, under hot conditions the central core 34 can support the outer or outermost energetic grain layer 32 and reduce or prevent sagging (creep). Under cold conditions the central core 34 can serve for stress relief as described above.

Also disclosed is a process for fabricating the central core 34 and solid propellant section 24 of the rocket motor 20. For example, the process includes additively fabricating the layers described herein. The central core 34 is then installed into the motor case 30, and the outer or outermost energetic grain layer 32 is then cast around the additively fabricated energetic grain layer or layers.

The additive fabrication, which may also be referred to as additive manufacturing or three-dimensional printing, can include an additive slurry technique or a powder technique. In the slurry technique, a slurry is fed under pressure to a heated nozzle.

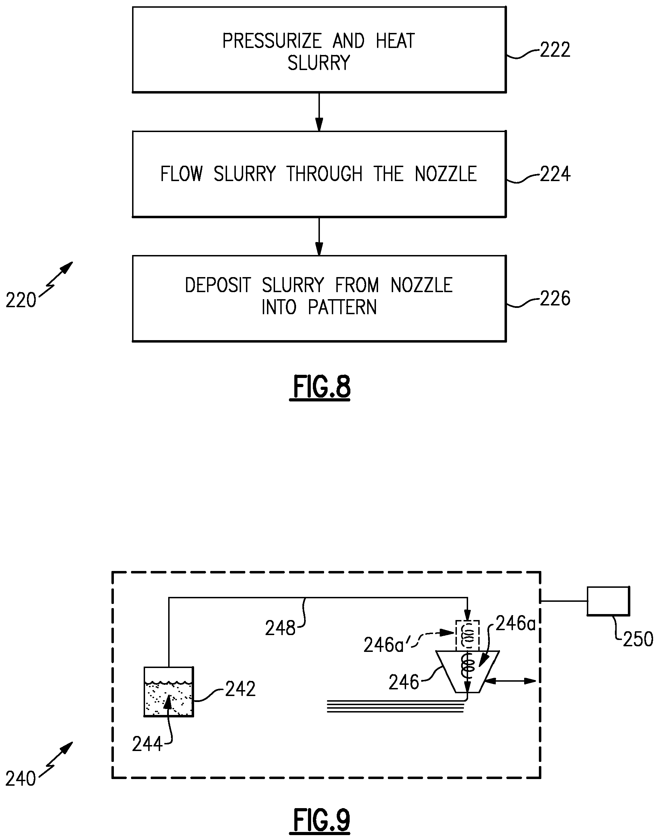

Figure 8 illustrates an example additive manufacturing process 220 using a slurry technique and Figure 9 depicts an example system 240 for performing the process 220. The process 220 can be used to form, or "print," solid energetic materials to make the central core 34.

The process 220 is described with respect to steps 222, 224, and 226, and the system 240. Additional processing steps may be used prior to, in between, or subsequent to the steps 222, 224, and 226. Generally, the system 240 includes a vessel 242 that holds a slurry 244, a nozzle 246 for dispensing the slurry 244, and one or more lines 248, such as pipes or tubes, through which the slurry 244 moves from the vessel 242 to the nozzle 46. The nozzle 246 may include a heating block 246a. Alternatively or additionally, the heating block 246a may be located adjacent to and upstream of the nozzle 246, as shown at 246a'. The vessel 242, the line 248, and the nozzle 246 may include one or more valves, one or more pumps, or the like for moving the slurry 244. A controller 250 is in communication with at least the nozzle 246 and may also be in communication with the vessel 242, the line 248, heating block 246a/246a', and any valve(s) or pump(s), to control operation of the system 240. In this regard, the controller 250 includes hardware, such as a micro-processor, software, or both, that are configured and/or programmed to carry out the process 220.

For printing a solid energetic material, such as the central core 34, the slurry 244 can include a mixture of a plastisol and solid energetic material. A plastisol is a mixture or suspension of polymeric particles in a liquid plasticizer. For instance, the plasticizer includes phthalates, adipates, or combinations thereof. Phthalates can include, but are not limited to, diisononyl phthalate (DINP), diisodecyl phthalate (DIDP), and di-2-ethylhexyl phthalate, and adipates can includes, but are not limited to, dioctyl adipate (DOA) and dioctyl sebacate (DOS). For example, the plastisol includes polymeric particles of at least one of polyvinyl chloride or nitrocellulose and a liquid plasticizer. The solid energetic material is also provided in particle form and is mixed with the plastisol.

The solid energetic material is selected according to the desired end use requirements. For example, the solid energetic material can include, but is not limited to, metallic fuels, oxidizers, and fuel/oxidizer blends. The solid energetic material may also include one or more inert binders, burn modifiers, stabilizers, and the like. In one example, the slurry 244 includes, by weight, approximately 7.5% of polyvinyl chloride, approximately 7.5% of a plasticizer, and approximately 85% of the solid energetic material. In a further example, the solid energetic material includes, by weight, approximately 18% of metallic fuel.

Turning again to the process 220, at step 222 the slurry is pressurized and heated. The slurry 244 is pressurized to facilitate flow from the vessel 242 through the line 248 to the nozzle 246. For example, the slurry 244 is pressurized in the vessel 242 at approximately 20 to 500 pounds per square inch. The slurry 244 is then fed under this pressure from the vessel 242 to the nozzle 246. The pressurization also facilitates suppression of curing prior to the nozzle 46 to reduce "globbing." In one further example based on the slurry composition described above that includes at least one of polyvinyl chloride or nitrocellulose, dioctyl adipate, and solid energetic material, the slurry 44 has a viscosity that is less than 20 kilopoise, is pressurized in the vessel 242 at approximately 30 to 40 pounds per square inch, and is heated to approximately 170 to 220 °F.

The slurry 244 may be at substantially ambient temperature until the heating. In this regard, in one example, the process 220 includes heating the slurry 244 in the nozzle2 46 via the heating block 246a. Alternatively, if the heating block 246a' is used, the slurry 244 is heated prior to the nozzle 246. The slurry 244 may be fully uncured or substantially fully uncured prior to being heated. At the proper temperature and pressure, the heating commences solvation of the polymeric particles (e.g., polyvinyl chloride) by the liquid plasticizer.

At step 224 the pressurized heated slurry 244 flows through the nozzle 246, and at step 226 the slurry 244 is deposited from the nozzle 246 in a predetermined pattern. Although the slurry 244 is pressurized and heated to the appropriate temperature at the heating block 246a or 246a' of the nozzle 246, the slurry 244 may reach a substantially fully cured or hardened state after being dispensed from the nozzle 246 and cooled. For instance, depending on the flow of the slurry 244, solvation and curing may begin in the nozzle 246 or after dispensing from the nozzle 246. In one example, heating to a temperature equal to or greater than a cure temperature of the slurry commences solvation of the polymeric particles by the liquid plasticizer and thus initiates curing and hardening of the slurry 44.

The predetermined pattern may be a computerized pattern of the central core 34. In this regard, the nozzle 246 moves back and forth to selectively deposit the slurry 244 in the computerized pattern. Additionally or alternatively, the substrate on which the slurry 244 is dispensed can be moved according to the computerized pattern. Multiple layers of the slurry 244 can be selectively deposited on one another to build-up the central core 34 in accordance with the computerized pattern.

In further examples, the nozzle 246 is also designed or selected with respect to the slurry composition. For instance, since the slurry 244 contains polymeric particles and solid energetic material particles, the dispensing orifice of the nozzle 246 through which the slurry 244 is deposited is at least as large as the largest particles in the composition. More typically, the orifice may be at least several times larger than the largest particles in the composition, to reduce bridging and plugging of the nozzle 246. For instance, the nozzle orifice can be, but is not limited to, 1/64 to 3/64 inches.

In a further example, the composition of the slurry 244 is selected with respect to the amount of heating provided at the heating block 246a or 246a'. For instance, the slurry composition has a ratio, by weight, of 80:20 to 20:80 with respect to the amount of polyvinyl chloride and/or nitrocellulose to the amount of dioctyl adipate. In a further example, the ratio is 60:40 to 40:60.

The pressure fed slurry feed to a heated nozzle may also be integrated into a conventional three dimensional printing machine (e.g., one from Stratsys or Makerbot). In particular, the filament feed system of such a conventional printing machine may be replaced with the pressure fed slurry feed to a heated nozzle. This approach provides for printing of solid energetic materials in controlled geometries, such as with the protrusions described herein.

In the powder technique, a powder of the solid energetic material is selectively deposited in a relatively thin layer, followed by deposition of a layer of liquid bonding agent, such as plasticizer and PVC. The bonding agent infiltrates the powder and then solidifies to hold the powder layer in place. The deposition of powder and bonding agent can be repeated over selected areas to provide a desired thickness and geometry. This approach also provides for printing of solid energetic materials in controlled geometries, such as with the protrusions described herein. Such geometries are not possible using conventional casting around a core. If a core were to include such features it would interlock with the cast grain material, preventing the core from being slid out without destroying the geometry of the cast grain material. The powder technique can alternatively or additionally be integrated into known powder-color printing systems.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments, the scope of present invention being defined by the appended claims.

## Claims

1. A solid propellant, comprising:
a first energetic grain layer (38, 40, 42, 44; 140, 142, 144) having a top surface and a bottom surface; and
a second energetic grain layer (38, 40, 42, 44; 140, 142, 144) having a top surface and a bottom surface, the second layer on top of the first layer, wherein the bottom surface of the second energetic grain layer (38...144) partially abuts the top surface of the first energetic grain layer (38...144);
**characterised in that**:
the bottom surface of the second energetic grain layer (38...144) and the top surface of the first energetic grain layer (38...144) define a micro-void (46, 48; 146, 148) therebetween.

2. The solid propellant as recited in claim 1, wherein the bottom surface of the second energetic grain layer (38...144) partially abuts the top surface of the first energetic grain layer (38...144) at a predetermined geometry.

3. The solid propellant as recited in claim 1 or 2, wherein the predetermined geometry is selected to define a predetermined flowpath via the micro-void (46, 48; 146, 148).

4. The solid propellant of claim 1, 2 or 3, wherein the bottom surface of the second energetic grain layer (38...144) includes a surface feature.

5. The solid propellant of claim 4, wherein the surface feature is selected from the group consisting of a protrusion, a rib, a bump, a trapezoid, an ellipsoid, a stud, and a honeycomb.

6. The solid propellant as recited in any preceding claim, wherein the micro-void (46, 48; 146, 148) is a radially elongated slot (46, 48).

7. The solid propellant as recited in any of claims 1 to 5, wherein the micro-void (46, 48; 146, 148) includes a hollow micro-sphere (146; 148).

8. The solid propellant section as recited in any preceding claim, wherein the first energetic grain layer (40, 44; 140, 144) includes the micro-void (46, 48; 146, 148) and the second energetic grain layer (38, 42; 142) is solid.

9. A rocket motor (20) comprising:
a nozzle (22); and
a solid propellant section (24) in communication with the nozzle (22), the solid propellant section (24) including a solid propellant as recited in any preceding claim.

10. The rocket motor as recited in claim 9, wherein the micro-void (46, 48; 146, 148) has a geometric shape.

11. The rocket motor as recited in claim 9 or 10, further comprising a plurality of the micro-voids (46, 48; 146, 148), and the micro-voids (46, 48; 146, 148) are uniformly circumferentially-spaced around a central axis (A).

12. The rocket motor as recited in claim 9, 10 or 11, further comprising an inner energetic grain layer (52) with a section aft of the micro-void (46, 48; 146, 148) with respect to proximity to the nozzle (22), the section including a group of protrusions (54) that are axially-spaced along a/the central axis (A).

13. The rocket motor as recited in claim 12, wherein the protrusions (54) have uniform axial thicknesses.

14. The rocket motor as recited in any of claims 9 to 13, wherein the first energetic grain layer (38...144) and the second energetic grain layer (38...144) are of different chemical compositions.

## Patentansprüche

1. Festtreibstoff, umfassend:
eine erste Energiekornschicht (38, 40, 42, 44; 140, 142, 144), die eine Deckfläche und eine Bodenfläche aufweist; und
eine zweite Energiekornschicht (38, 40, 42, 44; 140, 142, 144), die eine Deckfläche und eine Bodenfläche aufweist, die zweite Schicht auf der ersten Schicht, wobei die Bodenfläche der zweiten Energiekornschicht (38...144) teilweise an der Deckfläche der ersten Energiekornschicht (38...144) anliegt;
**dadurch gekennzeichnet, dass**:
die Bodenfläche der zweiten Energiekornschicht (38...144) und die Deckfläche der ersten Energiekornschicht (38...144) einen Mikrohohlraum (46, 48; 146, 148) dazwischen definieren.

2. Festtreibstoff nach Anspruch 1, wobei die Bodenfläche der zweiten Energiekornschicht (38...144) teilweise an der Deckfläche der ersten Energiekornschicht (38...144) bei einer vorgegebenen Geometrie anliegt.

3. Festtreibstoff nach Anspruch 1 oder 2, wobei die vorgegebene Geometrie ausgewählt ist, um einen vorgegebenen Flusspfad über den Mikrohohlraum (46, 48; 146, 148) zu definieren.

4. Festtreibstoff nach Anspruch 1, 2 oder 3, wobei die Bodenfläche der zweiten Energiekornschicht (38...144) ein Flächenmerkmal beinhaltet.

5. Festtreibstoff nach Anspruch 4, wobei das Flächenmerkmal aus der Gruppe ausgewählt ist, die aus einem Fortsatz, einer Rippe, einem Höcker, einem Trapezoid, einem Ellipsoid, einem Bolzen und einer Wabe besteht.

6. Festtreibstoff nach einem der vorstehenden Ansprüche, wobei der Mikrohohlraum (46, 48; 146, 148) ein radial länglicher Schlitz (46, 48) ist.

7. Festtreibstoff nach einem der Ansprüche 1 bis 5, wobei der Mikrohohlraum (46, 48; 146, 148) eine hohle Mikrokugel (146; 148) beinhaltet.

8. Festtreibstoff nach einem der vorstehenden Ansprüche, wobei die erste Energiekornschicht (40, 44; 140, 144) den Mikrohohlraum (46, 48; 146, 148) beinhaltet und die zweite Energiekornschicht (38, 42; 142) fest ist.

9. Raketenmotor (20), umfassend:
eine Düse (22); und
einen Festtreibstoffabschnitt (24) in Verbindung mit der Düse (22), wobei der Festtreibstoffabschnitt (24) einen Festtreibstoff nach einem der vorstehenden Ansprüche beinhaltet.

10. Raketenmotor nach Anspruch 9, wobei der Mikrohohlraum (46, 48; 146, 148) eine geometrische Form aufweist.

11. Raketenmotor nach Anspruch 9 oder 10, weiter umfassend eine Vielzahl der Mikrohohlräume (46, 48; 146, 148) und dass die Mikrohohlräume (46, 48; 146, 148) regelmäßig umlaufend beabstandet um eine Mittelachse (A) sind.

12. Raketenmotor nach Anspruch 9, 10 oder 11, weiter umfassend eine innere Energiekornschicht (52) mit einem Abschnitt hinter dem Mikrohohlraum (46, 48; 146, 148) in Bezug auf Nähe zur Düse (22), wobei der Abschnitt eine Gruppe von Fortsätzen (54) beinhaltet, die axial entlang einer/der Mittelachse (A) beabstandet sind.

13. Raketenmotor nach Anspruch 12, wobei die Fortsätze (54) einheitliche Achsendicken aufweisen.

14. Raketenmotor nach einem der Ansprüche 9 bis 13, wobei die erste Energiekornschicht (38...144) und die zweite Energiekornschicht (38...144) unterschiedliche chemische Zusammensetzungen haben.

## Revendications

1. Propergol solide, comprenant :
une première couche de pain énergétique (38, 40, 42, 44; 140, 142, 144) présentant une surface supérieure et une surface inférieure ; et
une seconde couche de pain énergétique (38, 40, 42, 44 ; 140, 142, 144) présentant une surface supérieure et une surface inférieure, la seconde couche sur la première couche, dans lequel la surface inférieure de la seconde couche de pain énergétique (38...144) est partiellement contiguë à la surface supérieure de la première couche de pain énergétique (38...144) ;
**caractérisé en ce que** :
la surface inférieure de la seconde couche de pain énergétique (38...144) et la surface supérieure de la première couche de pain énergétique (38...144) définissent un micro-vide (46, 48 ; 146, 148) entre elles.

2. Propergol solide selon la revendication 1, dans lequel la surface inférieure de la seconde couche de pain énergétique (38...144) est partiellement contiguë à la surface supérieure de la première couche de pain énergétique (38...144) selon une géométrie prédéterminée.

3. Propergol solide selon la revendication 1 ou 2, dans lequel la géométrie prédéterminée est sélectionnée pour définir un chemin d'écoulement prédéterminé via le micro-vide (46, 48 ; 146, 148).

4. Propergol solide selon la revendication 1, 2 ou 3, dans lequel la surface inférieure de la seconde couche de pain énergétique (38...144) inclut une caractéristique de surface.

5. Propergol solide selon la revendication 4, dans lequel la caractéristique de surface est sélectionnée à partir du groupe constitué d'une saillie, d'une rainure, d'une bosse, d'un trapèze, d'une ellipse, d'un goujon et d'une alvéole.

6. Propergol solide selon l'une quelconque des revendications précédentes, dans lequel le micro-vide (46, 48 ; 146, 148) est une fente radialement allongée (46, 48).

7. Propergol solide selon l'une quelconque des revendications 1 à 5, dans lequel le micro-vide (46, 48 ; 146, 148) inclut une microsphère creuse (146 ; 148).

8. Propergol solide selon l'une quelconque des revendications précédentes, dans lequel la première couche de pain énergétique (40, 44; 140, 144) inclut le micro-vide (46, 48 ; 146, 148) et la seconde couche de pain énergétique (38, 42 ; 142) est solide.

9. Moteur-fusée (20) comprenant :
une buse (22) ; et
une section de propergol solide (24) en communication avec la buse (22), la section de propergol solide (24) incluant un propergol solide selon l'une quelconque des revendications précédentes.

10. Moteur-fusée selon la revendication 9, dans lequel le micro-vide (46, 48 ; 146, 148) présente une forme géométrique.

11. Moteur-fusée selon la revendication 9 ou 10, comprenant en outre une pluralité des micro-vides (46, 48 ; 146, 148), et les micro-vides (46, 48 ; 146, 148) sont espacés circonférentiellement de manière uniforme autour d'un axe central (A).

12. Moteur-fusée selon la revendication 9, 10 ou 11, comprenant en outre une couche de pain énergétique intérieure (52) avec une section à l'arrière du micro-vide (46, 48 ; 146, 148) par rapport à la proximité de la buse (22), la section incluant un groupe de saillies (54) qui sont axialement espacées le long d'un/de l'axe central (A).

13. Moteur-fusée selon la revendication 12, dans lequel les saillies (54) présentent des épaisseurs axiales uniformes.

14. Moteur-fusée selon l'une quelconque des revendications 9 à 13, dans lequel la première couche de pain énergétique (38...144) et la seconde couche de pain énergétique (38...144) sont de compositions chimiques différentes.
